(19) Europäisches Patentamt

European Patent Office

Office européen des brevets

(11) **EP 1 207 658 A2**

(12) **EUROPÄISCHE PATENTANMELDUNG**

(43) Veröffentlichungstag:
**22.05.2002 Patentblatt 2002/21**

(51) Int Cl.7: **H04L 25/02**

(21) Anmeldenummer: **01127073.3**

(22) Anmeldetag: **14.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **16.11.2000 DE 10056824**

(71) Anmelder: **Frauenhofer-Gesellschaft zur Förderung der angewandten Forschung e.V. D-80636 München (DE)**

(72) Erfinder: **Klinski, Robert, Dipl.-Ing.**
**80804 München (DE)**

(74) Vertreter: **Schoppe, Fritz, Dipl.-Ing.**
**Schoppe, Zimmermann & Stöckeler**
**Patentanwälte**
**Postfach 71 08 67**
**81458 München (DE)**

(54) **Blinde Kanalschätzung**

(57) Eine Vorrichtung zum Schätzen eines Übertragungskanals basiert auf einer iterativen Verarbeitung von Folgen von Datenkoeffizienten, die am Ausgang des Übertragungskanals erhalten werden. Jede Folge wird jeweils mit einem ausgewählten Vorzeichen eines Datenkoeffizienten der entsprechenden Folge beaufschlagt (14) und dann gespeichert (16). In einem nächsten Iterationsschritt wird wieder ein Satz von beaufschlagten Datenkoeffizienten erzeugt und zu dem Speicherinhalt koeffizientenweise hinzuaddiert (24). Der Speicherinhalt liefert eine Schätzung (18) für eine Systemautokorrelationsfunktion des Übertragungskanals. Die neue Vorrichtung und das neue Verfahren liefern eine Möglichkeit der Kanalschätzung ohne Verwendung bekannter Eingangsfolgen, die zudem multiplikationsfrei ist und daher einfach zu realisieren ist. Die neue Vorrichtung und das neue Verfahren eignen sich besonders für eine dauerhafte Kanalüberwachung und zur dauerhaften Ansteuerung eines adaptiven Kanalentzerrers.

Fig. 1

EP 1 207 658 A2

**Beschreibung**

Die vorliegende Erfindung bezieht sich auf die Datenübertragung über veränderliche Kanäle und insbesondere auf Empfänger und Verfahren und Vorrichtungen zum Schätzen eines Übertragungskanals.

In Übertragungssystemen, die einen stark variierenden Übertragungskanal umfassen, ist eine Schätzung der Kanaleigenschaften wichtig, um den variablen Kanaleigenschaften gewissermaßen entgegensteuern zu können. Solche stark variierenden Übertragungskanäle treten insbesondere dann auf, wenn die Übertragungskanäle Freiraumübertragungskanäle sind, wie sie beispielsweise beim Mobilfunk vorhanden sind.

Die Kanalschätzung ist beispielsweise dafür notwendig, um empfangsseitig eventuelle Kanalentzerrungen mittels eines Entzerrers wieder rückgängig zu machen.

Aus diesem Grund werden in modernen Empfängern Kanalschätzverfahren eingesetzt. Diese Kanalschätzverfahren basieren darauf, daß eine bekannte Sendefolge vom Sender über den Übertragungskanal zum Empfänger übertragen wird, und daß die Empfangsfolge unter Kenntnis der Sendefolge ausgewertet wird, um die Übertragungskanal-Übertragungsfunktion zu ermitteln.

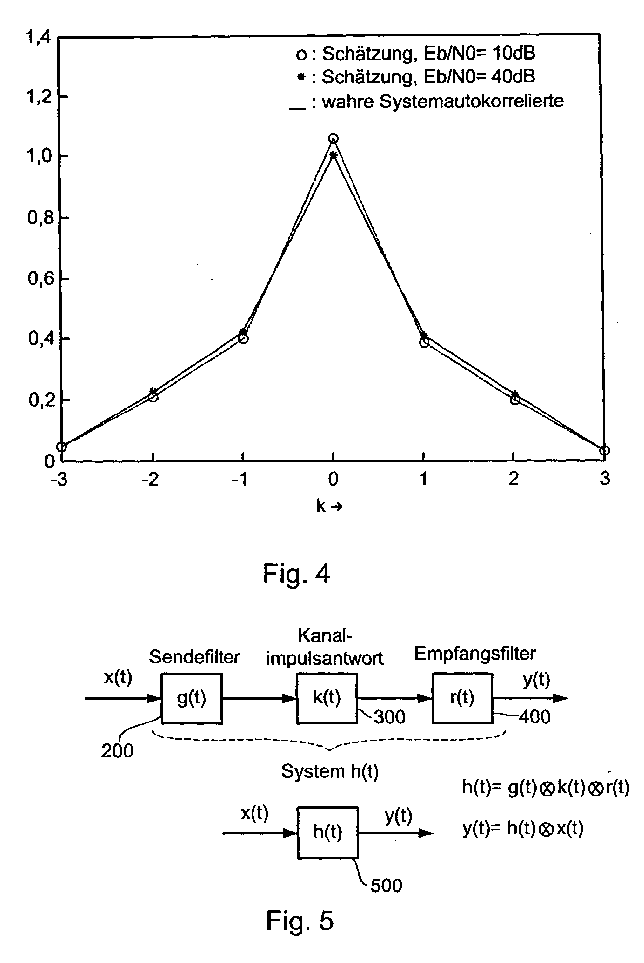

Zur Beschreibung dieser Zusammenhänge wird auf Fig. 5 Bezug genommen. Fig. 5 zeigt ein allgemeines Übertragungssystem mit einem Sendefilter 200, einem Übertragungskanal 300 und einem Empfangsfilter 400. In das Sendefilter wird ein Eingangssignal x(t) eingespeist, welches zu einem Ausgangssignal y(t) am Ausgang des Empfangsfilters 400 führt. Das Sendefilter, der Übertragungskanal und das Empfangsfilter bestimmen den eigentlichen Übertragungskanal bzw. das eigentliche Übertragungssystem, das mit h(t) bezeichnet werden kann. Wie es unten in Fig. 5 dargestellt ist, führt ein Eingangssignal x(t) in den Übertragungskanal 500 zu einem Ausgangssignal y(t). Das Übertragungssystem 500 kann im Zeitbereich durch seine Impulsantwort h(t) beschrieben werden, welche der Faltung der Impulsantwort des Sendefilters mit der Impulsantwort des Kanals und mit der Impulsantwort des Empfangsfilters entspricht. Das Ausgangssignal y(t) entspricht im Zeitbereich der Faltung der Impulsantwort des Übertragungskanals h(t) mit dem Eingangssignal x(t). Im Frequenzbereich erhält man die Fourier-Transformierte Y(f) als Systemübertragungsfunktion S(f) multipliziert mit der Fourier-Transformierten der Eingangsfolge X(f).

Kanalschätzverfahren basieren darauf, die Kanalimpulsantwort h(t) bzw. die Kanalübertragungsfunktion H(f) unter Verwendung eines bekannten Eingangssignals und des empfangenen Ausgangssignals zu berechnen. Wenn diskrete Signale betrachtet werden, so sind das Eingangssignal genauso wie das Ausgangssignal und die Kanalimpulsantwort eine diskrete Folge. Eine genaue Bestimmung der Kanalübertragungsfunktion ist theoretisch nur möglich, wenn eine unendlich lange bekannte Eingangsfolge gesendet wird und dann mit einer unendlich langen Empfangsfolge kombiniert wird, um die Kanalimpulsantwort zu berechnen. In der Praxis müssen jedoch Folgen endlicher Länge verwendet werden.

In vielen Fällen sind jedoch die Längen der bekannten Eingangsfolgen beträchtlich, um zu einer guten Kanalschätzung zu gelangen. Dies bedeutet jedoch in anderen Worten, daß das Nutzsignal, das eigentlich über den Übertragungskanal übertragen werden soll, dann nicht übertragen werden kann, wenn die bekannte Eingangsfolge zur Kanalschätzung gesendet wird. Die Kanalschätzung führt daher zu einem Verlust an Übertragungskapazität. Um diesen Verlust so gering als möglich zu halten, werden üblicherweise relativ kurze bekannte Sendefolgen verwendet, welche jedoch wiederum den Nachteil mit sich bringen, daß die Qualität der Kanalschätzung darunter leidet. Generell kann gesagt werden, daß Kanalschätzverfahren mit bekannten Sendefolgen zu einer erheblichen Einschränkung der Nutzkapazität eines Übertragungssystems führen, wenn eine hohe Qualität der Kanalschätzung erreicht werden soll. Werden die Folgen dagegen kurz gewählt, um den Overhead zu begrenzen, so werden nur Kanalschätzergebnisse mit geringerer Qualität erzielt.

Die Fachveröffentlichung von Kammermeyer, K.D.; Kroschel, K.: Digitale Signalverarbeitung, Filterung und Spektralanalyse mit MATLAB-Übungen., 4., vollständig überarbeitete und erweiterte Auflage, Stuttgart: Teubner, 1998, S. 295-297, ISBN 3-519-36122-1 offenbart eine Summationsgleichung zur Schätzung einer Autokorrelationsfolge. Hierbei erfolgt eine Summation von jeweils zwei zuvor multiplizierten Werten einer Musterfunktion.

Die DE 19523327 C2 offenbart ein Verfahren zur verbesserten Schätzung der Impulsantwort eines Übertragungskanals, wobei das Signal ein Trainingssignal einer Trainingssequenz mit bekanntem Informationsgehalt enthält. Der Verlauf des Trainingssignals wird am empfängerseitigen Ende des Übertragungssystems zu bestimmten Zeitpunkten abgetastet und gespeichert. Aus dem Trainingssignal wird ferner eine geschätzte Impulsantwort des Übertragungssystems oder eine geschätzte Übertragungsfunktion ermittelt. Die Übertragungsfunktion kann in einem empfängerseitigen Entzerrer verwendet werden.

Die Aufgabe der vorliegenden Erfindung besteht darin, ein Konzept zum besseren Schätzen eines Übertragungskanals sowie einen Empfänger, in dem dieses Konzept implementiert ist, zu schaffen.

Diese Aufgabe wird durch eine Vorrichtung zum Schätzen eines Übertragungskanals nach Patentanspruch 1, ein Verfahren zum Schätzen eines Übertragungskanals nach Patentanspruch 13 oder durch einen Empfänger nach Patentanspruch 15 gelöst.

Der vorliegenden Erfindung liegt die Erkenntnis zugrunde, daß von der Kanalschätzung mit bekannten Sendefolgen weggegangen werden muß, und daß die Nutzdaten bzw. irgendwelche beliebigen Empfangsdaten am Ausgang des Übertragungskanals zur Kanalschätzung herangezogen werden müssen, um eine gute Kanalschätzung einerseits und keinen Verlust an Übertragungskapazität andererseits zu erreichen. Das erfindungsgemäße Konzept zum Schätzen eines Übertragungskanals umfaßt ein iteratives Verfahren, bei dem die Kanalschätzung mit jedem Iterationsschritt qualitativ besser wird. Das Verfahren zeichnet sich durch eine hohe Konvergenz aus, derart, daß nur eine begrenzte Anzahl von Iterationsschritten erforderlich ist, um eine hochqualitative Kanalschätzung zu erhalten.

Die erfindungsgemäße Vorrichtung zum Schätzen eines Übertragungskanals umfaßt eine Erfassungseinrichtung zum Erfassen einer Folge von Datenkoeffizienten am Ausgang des Übertragungskanals. Jeder der Datenkoeffizienten wird mit einem Vorzeichen beaufschlagt, das aus den Datenkoeffizienten ausgewählt ist. Anschließend werden die mit diesem Vorzeichen beaufschlagten Datenkoeffizienten gespeichert. Der erste Iterationsschritt ist damit beendet. Im zweiten Iterationsschritt wird eine neue Folge von Datenkoeffizienten erfaßt, wieder mit einem von diesen Datenkoeffizienten ausgewählten Vorzeichen beaufschlagt und dann zu den abgespeicherten beaufschlagten Datenkoeffizienten, die als Ergebnis des ersten Iterationsschrittes erhalten wurden, hinzu addiert. Bereits nach dem zweiten Iterationsschritt kann aus den aufaddierten Datenkoeffizienten eine Schätzung für die Systemautokorrelationsfunktion oder Systemautokorrelierte des Übertragungskanals abgeleitet werden.

Die Iteration kann beliebig oft wiederholt werden. In einem dritten Schritt beispielsweise wird eine neue Folge von Datenkoeffizienten am Ausgang des Übertragungskanals erfaßt, wonach jeder Datenkoeffizient dieser weiteren Folge mit einem Vorzeichen eines Datenkoeffizienten dieser Folge beaufschlagt wird. Der Satz von beaufschlagten Datenkoeffizienten wird dann zu den im Speicher gehaltenen aufaddierten Datenkoeffizienten hinzu addiert. Die Datenkoeffizienten ergeben dann wieder eine verbesserte Schätzung für die Systemautokorrelationsfunktion des Übertragungskanals.

Das erfindungsgemäße Konzept basiert darauf, daß die Systemautokorrelationsmatrix des Übertragungskanals eine Anzahl von Zeilen und Spalten aufweist, wobei diese Anzahl gleich der Anzahl der Kanalkoeffizienten ist. Jede Zeile bzw. jede Spalte der Systemautokorrelationsmatrix umfaßt alle Informationen der Systemautokorrelierten. Es muß also zum Schätzen der Systemautokorrelierten nicht die gesamte Systemautokorrelationsmatrix berechnet werden, sondern lediglich eine beliebige Zeile oder eine beliebige Spalte derselben. Welche Zeile oder Spalte der Systemautokorrelationsmatrix berechnet wird, hängt wiederum davon ab, von welchem Datenkoeffizient der erfaßten Folge von Datenkoeffizienten das Vorzeichen verwendet wird, um alle anderen Datenkoeffizienten damit zu beaufschlagen. Wird das Vorzeichen des ersten Datenkoeffizienten genommen, so wird die erste Spalte der Systemautokorrelationsmatrix abgeschätzt.

Wird dagegen das Vorzeichen des letzten Datenkoeffzienten einer Datenfolge zum Beaufschlagen verwendet, so wird die letzte Spalte der Systemautokorrelationsmatrix berechnet. Analog kann man eine beliebige Spalte der Systemautokorrelationsmatrix oder aber, wenn die konjugiert komplexen Werte der Systemautokorrelationsmatrix genommen werden, eine beliebige Zeile dieser Matrix berechnen. Wenn zur Berechnung des Systemautokorrelationsfunktion eine andere Zeile oder Spalte als die erste Zeile oder Spalte verwendet wird, so muß darauf geachtet werden, daß die aufaddierten Datenkoeffizienten entsprechend umsortiert werden, damit die Systemautokorrelationsfunktion in der richtigen Reihenfolge ausgehend von einem Zeitpunkt 0 bis zu einem Zeitpunkt p vorliegt. Daraus ist ersichtlich, daß auch von einem Iterationsschritt zum nächsten Iterationsschritt das Vorzeichen eines anderen Datenkoeffizienten in der Reihenfolge der erfaßten Folge verwendet werden kann. In diesem Fall müssen jedoch die beaufschlagten Datenkoeffizienten vor dem Aufaddieren entsprechend umsortiert werden. Diese Möglichkeit wird aufgrund des höheren Schaltungsaufwands beispielsweise unter Verwendung einer festverdrahteten Umsortierungseinrichtung nicht bevorzugt, kann jedoch dann sinnvoll sein, wenn Unsicherheiten bezüglich der Qualität eines empfangenen Datenkoeffizienten bestehen, und damit auch Unsicherheiten bezüglich des Vorzeichens bestehen, obwohl das erfindungsgemäße Konzept zum Schätzen der Übertragungsfunktion gegenüber solchen Fehlern sehr robust ist.

Das erfindungsgemäße Konzept ist dahingehend vorteilhaft, daß lediglich einfache Operationen zum iterativen Abschätzen der Systemautokorrelationsfunktion erforderlich sind, nämlich das Beaufschlagen eines Datenkoeffizienten mit einem bestimmten Vorzeichen, also nur eine Vorzeichenänderung, falls das Vorzeichen negativ ist, bzw. überhaupt keine Operation, falls das Vorzeichen positiv ist. Darüberhinaus wird lediglich eine einfache schnell zu realisierende Additionsoperation zum Aufaddieren der Datenkoeffizienten benötigt. Es werden keine Divisionen oder Multiplikationen erforderlich.

Ein weiterer Vorteil der vorliegenden Erfindung besteht darin, daß die aufaddierten Datenkoeffizienten bereits den qualitativen Verlauf der Systemautokorrelationsfunktion ohne weitere Rechenoperationen wiedergeben. Um die Systemautokorrelationsfunktion quantitativ zu bestimmen, muß lediglich eine einfache Skalierungsoperation durchgeführt werden, welche als Eingangswert lediglich die Leistung des Eingangssignals benötigt. Die Leistung des Eingangssignals bzw. das Quadrat der Standardabweichung desselben ist jedoch insbesondere bei digitalen Übertragungssystemen ohnehin bekannt, ohne die Eingangsfolge selbst kennen zu müssen. Solche digitalen Übertragungssysteme werden wenn möglich immer so betrieben, daß die Leistung des gesendeten Signals im wesentlichen über der Zeit konstant ist.

Ein weiterer Vorteil der vorliegenden Erfindung besteht darin, daß eine dauernde On-Line-Überwachung des Übertragungskanals gewissermaßen als "Abfallprodukt" des Empfangsprozesses möglich ist, so daß keine Übertragung von Nutzdaten unterbrochen werden muß, um eine Kanalschätzung zu erhalten, wie es jedoch dann erforderlich ist, wenn eine bekannte Eingangsdatenfolge verwendet werden müßte.

Ein weiterer Vorteil der vorliegenden Erfindung besteht darin, daß bei dauernder Überwachung des Kanals beliebig viele Iterationsschritte ausgeführt werden, so daß die Schätzung beliebig genau wird, wenn sich der Kanal nicht all zu stark ändert. Aufgrund der hohen Konvergenz des erfindungsgemäßen Konzepts werden jedoch auch bei einer dauernden Kanalüberwachung schnelle Änderungen des Kanals sehr zügig in der Kanalschätzung zutage treten. Dies ist bei einem Verfahren zur Kanalschätzung mit bekannter Nutzdatenfolge nicht möglich, da niemand weiß, wann eine Kanaländerung stattgefunden hat, so daß es auch nicht möglich ist, genau zum Zeitpunkt einer Kanaländerung eine bekannte Nutzdatenfolge zu senden, um genau dann den veränderten Kanal feststellen zu können.

Ein weiterer Vorteil der vorliegenden Erfindung besteht darin, daß die Systemautokorrelationsfunktion ohne weiteres beispielsweise mittels einer schnellen Fourier-Transformation in den Frequenzbereich transformiert werden kann, um die spektrale Leistungsdichte des Kanals zu erhalten. Wird die Wurzel aus der spektralen Leistungsdichte des Kanals gebildet, so ergibt sich ohne weiteres die Betragsübertragungsfunktion über der Frequenz des Kanals, derart, daß ein Kanalentzerrer mit unmittelbar diesen Daten angesteuert werden kann, um eine schnelle und dauernd wirksame adaptive Kanalentzerrung hinsichtlich des Amplitudengangs ohne wesentlichen Schaltungsaufwand durchführen zu können.

Bevorzugte Ausführungsbeispiele der vorliegenden Erfindung werden nachfolgend bezugnehmend auf die beiliegenden Zeichnungen detailliert erläutert. Es zeigen:

Fig. 1    ein Blockschaltbild einer Vorrichtung zum Schätzen eines Übertragungskanals;

Fig. 2    ein Beispiel für eine detailliertere Darstellung der erfindungsgemäßen Vorrichtung von Fig. 1;

Fig. 3    ein Flußdiagramm, das das erfindungsgemäße Verfahren veranschaulicht;

Fig. 4    ein Simulationsbeispiel; und

Fig. 5    eine allgemeine Darstellung zur Erläuterung eines Übertragungskanals, in den ein Eingangssignal eingegeben wird, und aus dem ein Ausgangssignal ausgegeben wird.

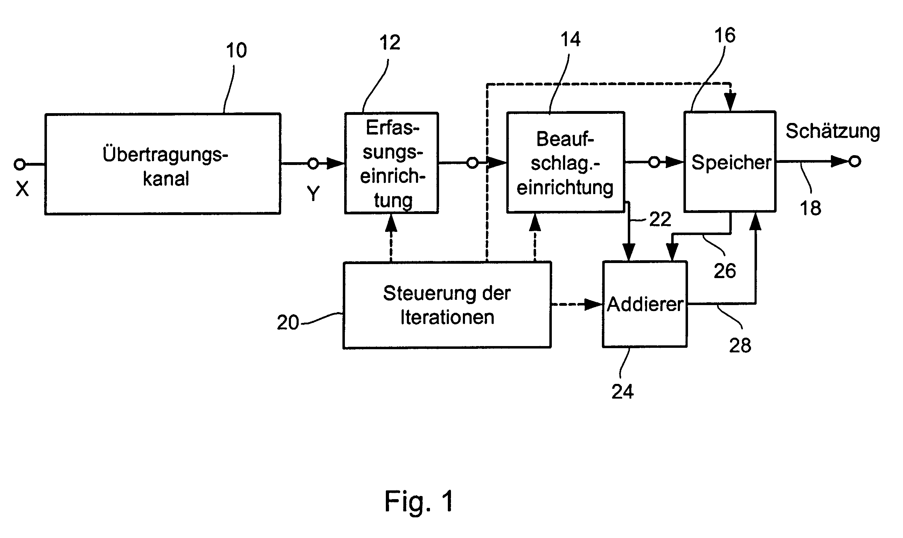

Bevor auf Fig. 1 eingegangen wird, um eine Vorrichtung zum Schätzen eines Übertragungskanals gemäß der vorliegenden Erfindung zu erläutern, wird eine Übersicht über mathematische Grundlagen gegeben, welche zum Verständnis der vorliegenden Erfindung von Bedeutung sind. Um die nachfolgende Beschreibung zu vereinfachen, wird im nachfolgenden ohne Einschränkung der Allgemeinheit eine zeitdiskrete Darstellung verwendet. Werden mit $x = [x_0, ..., x_n]^T$ die Eingangsdatenfolge und mit $y = y_0, ..., y_n]^T$ die empfangene Datenfolge oder Ausgangsdatenfolge bezeichnet, so können die Autokorrelationsmatrizen des Ausgangs- und des Eingangssignals wie folgt berechnet werden:

$$R_{yy} = E\{yy^H\}$$
$$R_{xx} = E\{xx^H\} \tag{1}$$

$R_{yy}$ ist die Autokorrelationsmatrix des Ausgangssignals, während $R_{xx}$ die Autokorrelationsmatrix des Eingangssignals ist. Der Operator $E\{...\}$ bezeichnet den Erwartungswert. Es gibt mehrere Möglichkeiten, einen Erwartungswert zu berechnen, beispielsweise einfach durch eine zeitliche Mittelung oder andere Maßnahmen, welche in der Technik bekannt sind, um die Rauschprozesse zu eliminieren. Der Ausdruck $(...)^H$ stellt den hermiteschen Operator dar, welcher bekanntlich eine Transposition sowie eine Konjugation umfaßt. Der Ausdruck $(...)^T$ bedeutet Transposition.

Die Autokorrelationsfolge

$$r_{yy} = [r_{yy}(0)...r_{yy}(n)] \tag{2}$$

stellt die Grundlage für die Bildung der Autokorrelationsmatrix $R_{yy}$ folgender Gestalt dar:

$$R_{yy} = \begin{bmatrix} r_{yy}(0) & r_{yy}(1) & \dots & r_{yy}(n) \\ r^*_{yy}(1) & r_{yy}(0) & \dots & r_{yy}(n-1) \\ \dots & \dots & \dots & \dots \\ r^*_{yy}(n) & r^*_{yy}(n-1) & \dots & r_{yy}(0) \end{bmatrix} \qquad (3)$$

Ist das Eingangssignal x unkorreliert, so gilt folgender Zusammenhang:

$$E\{x_i x_k^H\} = 0 \qquad (4)$$

Die Indizes i und k bedeuten hier Zeitindizes bzw. die Nummer eines Eingangs-Datenkoeffizienten in der Folge von Eingangsdatenkoeffizienten. Für die Varianz $\sigma$ ergibt sich folgender Ausdruck:

$$E\{xx^H\} = \sigma^2 \cdot I \qquad (5)$$

I bedeutet hier die Einheitsmatrix der Dimension (n+1, n+1). Der Parameter n bezeichnet die Länge der Eingangsfolge, wobei eine Eingangsfolge Datenkoeffizienten vom Index 0 bis zum Index n umfaßt, so daß die Gesamtanzahl der Datenkoeffizienten in einer Eingangsfolge n+1 beträgt. Wird nun die Autokorrelationsmatrix $R_{yy}$ des Ausgangssignals y gebildet, so ergibt sich folgender Zusammenhang:

$$E\{yy^H\} = \sigma^2 R_{hh} \qquad (6)$$

In Gleichung (6) bezeichnet der Ausdruck $R_{hh}$ die Systemautokorrelationsmatrix

$$R_{hh} = \begin{bmatrix} r_{hh}(0) & r_{hh}(1) & \dots & r_{hh}(p) \\ r^*_{hh}(1) & r_{hh}(0) & \dots & r_{hh}(p-1) \\ \dots & \dots & \dots & \dots \\ r^*_{hh}(p) & r^*_{hh}(p-1) & \dots & r_{hh}(0) \end{bmatrix} \qquad (7)$$

Mit

$$r_{hh} = [r_{hh}(0)\dots r_{hh}(p)]^T \qquad (8)$$

ist die entsprechende Systemautokorrelierte bzw. Systemautokorrelationsfunktion bezeichnet, welche durch die erfindungsgemäße Vorrichtung zum Schätzen eines Übertragungskanals abgeschätzt werden soll. Aus Gleichung (7) wird deutlich, daß die Systemautokorrelationsfunktion in jeder Zeile bzw. in jeder Spalte der Systemautokorrelationsmatrix $R_{hh}$ vollständig vorhanden ist. Um die Systemautokorrelationsfunktion abzuschätzen, ist es daher nicht erforderlich, die Systemautokorrelationsmatrix vollständig zu berechnen, sondern lediglich eine Zeile oder eine Spalte bzw. jeweils ein Element aus einer Spalte bzw. jeweils ein Element aus einer Zeile, um sämtliche (p+1) Koeffizienten der Systemautokorrelationsfunktion $R_{hh}$ zu erhalten.

Damit die Dimensionen in Gleichung (6) erfüllt sind, muß z. B. für den Fall, daß p kleiner als n ist, die Matrix $R_{hh}$ einfach durch Auffüllen mit Nullen auf die erforderliche Dimension gebracht werden. Es sei darauf hingewiesen, daß der Index p den höchsten Koeffizienten der Systemautokorrelationsfunktion bezeichnet, und daß der Index 0 den ersten Koeffizienten der Systemautokorrelationsfunktion bezeichnet, so daß die Systemautokorrelationsfunktion insgesamt über (p+1) Koeffizienten verfügt. Ist die Anzahl der Koeffizienten der Systemautokorrelierten so bestimmt, daß sämtliche Koeffizienten der Systemautokorrelationsfunktion ungleich 0 sind bzw. - es müssen numerische Abweichungen berücksichtigt werden - weniger als eine vorbestimmte Schwelle von 0 entfernt sind, so stellt der Ausdruck (p+1) den Grad des Kanals dar, d. h. die Länge der Systemautokorrelationsfunktion des Kanals.

Um die oben angesprochenen formalen Probleme hinsichtlich unterschiedlicher Indizes p und n zu vermeiden, wird stets ohne Einschränkung des allgemeinen Falls von p = n ausgegangen. Dies bedeuet lediglich, daß die jeweils empfangene bzw. erfaßte Folge p+1 Koeffizienten hat. In der Praxis wird es bevorzugt, die Anzahl der Datenkoeffizienten der Folge von Datenkoeffizienten, die erfaßt wird, so zu wählen, daß dieselbe gleich der Anzahl der Koeffizienten der Systemautokorrelationsfunktion des Kanals sind, d. h. daß die Anzahl von Datenkoeffizienten einer erfaßten Folge gleich dem Grad des Kanals ist.

Um die Systemautokorrelierte $R_{hh}$ zu bestimmen, muß, wie es aus Gleichung (7) ersichtlich ist, lediglich entweder eine Zeile oder eine Spalte der Systemautokorrelationsmatrix $R_{hh}$ berechnet werden. Im nachfolgenden wird wieder ohne Einschränkung der Allgemeinheit beispielhaft die Bestimmung der Systemautokorrelierten anhand der ersten Spalte der Systemautokorrelationsmatrix beschrieben.

Alle anderen Spalten oder auch alle anderen Zeilen können jedoch ebenso, wie es ausgeführt worden ist, ohne weiteres zur Kanalschätzung hergenommen werden, und zwar durch Verwenden des Vorzeichens eines anderen Datenkoeffizienten in der Folge von erfaßten Datenkoeffizienten.

Um die erste Spalte von Gleichung (7) zu bestimmen, muß lediglich der erste Datenkoeffizient $y_0$ der empfangenen Datenfolge zur Erwartungswertbildung analog Gleichung (1) herangezogen werden:

$$E\{y_0{}^* \cdot y\} = \sigma^2 r^*{}_{hh} \tag{9}$$

Es sei darauf hingewiesen, daß $y_0$ ein skalarer Koeffizient ist. Zu beachten ist ferner, daß die Systemautokorrelierte nach Gleichung (9) in ihrer konjugierten Form geschätzt wird, was jedoch keine Rolle spielt, da mittels einer weiteren Konjugation von der konjugierten Form wieder in die unkonjugierte Form übergegangen werden kann.

Im Falle komplexwertiger Systeme, wenn also die empfangenen Datenkoeffizienten komplexe Datenkoeffizienten sind, wie sie beispielsweise entstehen, wenn eine IQ-Modulation/Demodulation im Übertragungssystem stattfindet, also wenn eine IQ-Umsetzung in das äquivalente Basisband durchgeführt wird, kann Gleichung (9) weiter vereinfacht werden. Bezeichnet y' den Realteil und y'' dem Imaginärteil von y = y' + jy'', so beinhalten sowohl der Realteil als auch der Imaginärteil die gesamte Information über die Systemautokorrelationsfunktion, was sich gleichungsmäßig folgendermaßen ausdrücken läßt:

$$E\{y'y^H\} = E\{y''y^H\} = \frac{\sigma^2}{2} R_{hh} \tag{10}$$

In Gleichung (10) wird folgende Eigenschaft komplexer unkorrelierter Prozesse verwendet:

$$E\{x'x'^H\} = E\{x''x''^H\} = \frac{\sigma^2}{2} \tag{11}$$

Gleichung (11) bedeutet in anderen Worten, daß die Signalleistung des Eingangssignals gleichmäßig auf den Real- und dem Imaginärteil der Sendefolge x verteilt ist. Mit Gleichung (11) kann die Gleichung (6) folgendermaßen vereinfacht werden:

$$\frac{\sigma^2}{2} R_{hh} = E\{y'y^H\} = E\{y''y^H\} \tag{12}$$

Für Gleichung (9) bedeutet dies:

$$\frac{\sigma^2}{2} r^*{}_{hh} = E\{y'_0 \cdot y\} = E\{y''_0{}^* \cdot y^H\} \tag{13}$$

Erfindungsgemäß wird, um zu einem Multiplikations/Divisions-freien Algorithmus zu gelangen, folgende Näherung durchgeführt:

$$E\left\{\frac{y}{|y|} \cdot y^H\right\} \approx \frac{E\{|x|\}}{\sqrt{r_{hh}(0)}} \cdot R_{hh} = C \cdot R_{hh} \qquad (14)$$

Gleichung (14) besagt folgendes: Wird bei der Bildung der Autokorrelationsmatrix des Ausgangssignals y eines der Elemente durch seinen Betrag geteilt, d. h. wird formal eine Kreuzkorrelation zwischen y und y/(Betrag von y) gebildet, so ist das näherungsweise Ergebnis die Systemautokorrelierte, d. h. die Systemautokorrelationsfunktion, skaliert mit folgendem Faktor:

$$C = \frac{E\{|x|\}}{\sqrt{r_{hh}(0)}} \qquad (15)$$

$r_{hh}(0)$ bezeichnet in Gleichung (15) die Systemenergie, d. h. den ersten Koeffizienten von $r_{hh}$ (siehe Gleichung (8)). Der Ausdruck im Zähler von Gleichung (15) hängt von der Leistung des gesendeten Signals und von seiner statistischen Verteilung ab, welche eine Gauß-Verteilung oder eine andere bekannte Verteilung sein kann. Ferner ist der Zähler von Gleichung (15) davon abhängig, ob reelle oder komplexwertige Systeme betrachtet werden. Ist x beispielsweise reell und umfaßt x eine Gauß-Verteilung, so ist die Konstante C durch folgenden Gleichung (16) gegeben:

$$C = \frac{1}{\sqrt{r_{hh}(0)}} \cdot \sqrt{\frac{2\sigma^2}{\pi}} \qquad (16)$$

Wird Gleichung (15) in Gleichung (13) berücksichtigt, so folgt folgender Zusammenhang:

$$E\left\{\frac{y'_0}{|y'_0|} \cdot y\right\} = E\left\{\frac{y''_0{}^*}{|y''_0|} \cdot y^H\right\} \approx \left(\frac{E\{|x'|\}}{\sqrt{r_{hh}(0)}} \cdot r^*_{hh}\right) = \frac{E\{|x''|\}}{\sqrt{r_{hh}(0)}} \cdot r^*_{hh} \qquad (17)$$

Gleichung (17) gibt den multiplikationsfreien Algorithmus zu Schätzung der Systemautokorrelationsfunktion des Kanals an. Da mit

$$y'_0/|y'_0|, y''_0/|y''_0| \qquad (18)$$

Die Vorzeichen von $y'_0$ und $y''_0$ definiert sind, werden in dem in Gleichung (17) beschriebenen Algorithmus lediglich Additions- bzw. Subtraktionsoperationen benötigt.

Es sei darauf hingewiesen, daß das erfindungsgemäße Konzept zum Schätzen eines Übertragungskanals, obgleich dasselbe oben anhand der Bestimmung der ersten Spalte der Systemautokorrelationsmatrix (Gleichung (7)) erläutert worden ist, unter Verwendung sämtlicher Elemente der Matrix in Gleichung (7) ausgeführt werden kann, so daß also Fälle denkbar sind, wo nur bestimmte Teile der Systemautokorrelationsmatrix bestimmt werden.

Darüberhinaus kann zur Bestimmung der Systemautokorrelationsfunktion mit dem in Gleichung (17) gegebenen Algorithmus eine beliebige Kombination und Reihenfolge verwendet werden. Es kann beispielsweise nur der Realteil y' oder der Imaginärteil y'' verwendet werden. Alternativ können beide Teile gleichzeitig herangezogen werden, oder auch beliebige Permutationen zwischen denselben, beispielsweise der erste Koeffizient der Systemautokorrelationsfunktion anhand des Realteils, der zweite Koeffizient der Systemautokorrelationsfunktion anhand des Imaginärteils, etc.

Wird Gleichung (17) für den Fall formuliert, daß die Systemautokorrelationsfunktion anhand des Realteils des ersten Koeffizienten der empfangenen Datenfolge bestimmt wird, so kann Gleichung (17) zu Gleichung (19) vereinfacht werden.

$$E\{\text{sign}(\text{real}(y_0)) \cdot y\} = \frac{E\{|x'|\}}{\sqrt{r_{hh}(0)}} \cdot r^*_{hh} \qquad (19)$$

Es ist zu sehen, daß der Erwartungswert des Vorzeichens des Realteils des ersten empfangenen Koeffizienten einer Datenfolge multipliziert mit der empfangenen Datenfolge gleich der Konstante C aus Gleichung (15) multipliziert mit der konjugiert Komplexen der Systemautokorrelationsfunktion ist. Gleichung (19) stellt ein iteratives Verfahren dar, obgleich in Gleichung (19) die Iterationsvorschrift lediglich implizit vorhanden ist. So gilt folgender Zusammenhang für den Erwartungswert E:

$$E = \lim_{N \to \infty} \frac{1}{N} \sum_{i=0}^{i=N-1} \text{sign}(\text{real} y_{0,i})) \cdot y_i \qquad (20)$$

Es ist zu sehen, daß sich der korrekte Erwartungswert erst ergibt, wenn eine unendlich große Anzahl von Iterationen durchgeführt worden ist, d. h. wenn die Anzahl der Iterationen N gegen unendlich geht. Wie es bereits ausgeführt worden ist, ist das erfindungsgemäße Konzept zum Schätzen eines Übertragungskanals jedoch gut konvergent, so daß nur eine kleinere Anzahl von Iterationen, welche typischerweise deutlich unter 100 und je nach Genauigkeit der Schätzung unter 10 liegen kann, zur Kanalschätzung ausreicht, was wiederum wichtig ist, um mit relativ geringem Zeitversatz einen Kanal dynamisch erfassen und damit einen Kanalentzerrer dynamisch ansteuern zu können. In Gleichung (20) ist die Iterationsvorschrift durch die Summe gegeben, die sich von i = 0 bis i = N -1 erstreckt. Der Index i = 0 stellt die erste erfaßte Datenfolge dar, wobei dies auch als erster Iterationsschritt bezeichnet werden kann. Für den Index i = 1 ergibt sich die zweite erfaßte Datenfolge, die nach einem Beaufschlagen derselben mit dem Vorzeichen beispielsweise des ersten Datenkoeffizienten der Datenfolge zu der beaufschlagten ersten Datenfolge hinzu addiert wird. Dieses Prozedere wird für eine erwünschte Anzahl von Iterationen wiederholt, so daß die Schätzung für die Systemautokorrelationsfunktion immer besser wird.

Nachfolgend wird auf Fig. 1 Bezug genommen, um eine Vorrichtung zum Schätzen eines Übertragungskanals gemäß der vorliegenden Erfindung darzustellen. Der Übertragungskanal, der in Fig. 1 allgemein mit 10 dargestellt ist, erhält eingangsseitig eine Eingangsdatenfolge x, um ausgangsseitig eine Ausgangsdatenfolge y auszugeben. Die Eingangsdatenfolge x muß bei dem erfindungsgemäßen Konzept nicht bekannt sein. Die Ausgangsfolge y wird in eine Erfassungseinrichtung 12 eingespeist, welche immer eine Folge von Datenkoeffizienten erfaßt. Nachdem eine Folge von Datenkoeffizienten, beispielsweise mit 20 Datenkoeffizienten, erfaßt ist, wird diese Folge einer Beaufschlagungseinrichtung 14 zugeführt, um, wie es in Gleichung (19) und Gleichung (20) zum Ausdruck gebracht ist, mit dem Vorzeichen eines Datenkoeffizienten, beispielsweise dem Vorzeichen des Realteils des ersten Datenkoeffizienten beaufschlagt zu werden. Dies bedeutet, daß die Vorzeichen sämtlicher Datenkoeffizienten der Folge von Datenkoeffizienten umgekehrt werden, falls das ausgewählte Vorzeichen, d. h. im vorliegenden Beispiel das Vorzeichen des Realteils des ersten Datenkoeffizienten negativ ist. Falls dieses Vorzeichen positiv ist, werden die Datenkoeffizienten der Folge von Datenkoeffizienten nicht verändert. Der Ausdruck "Beaufschlagen" bedeutet also, daß die Vorzeichen der Datenkoeffizienten geändert werden, falls das ausgewählte Vorzeichen ein "-" ist, und daß die Vorzeichen der Datenkoeffizienten nicht geändert werden, sondern daß die Datenkoeffizienten unverändert weitergeleitet werden, wenn das ausgewählte Vorzeichen ein "+" ist.

Der Satz von beaufschlagten Datenkoeffizienten wird dann einem Speicher 16 zugeführt, wobei der Speicher 16 ferner einen Ausgang 18 aufweist, über den der Speicherinhalt ausgegeben werden kann. Prinzipiell ist bereits der erste Satz von beaufschlagten Datenkoeffizienten eine erste Schätzung für die Systemautokorrelationsfunktion des Übertragungskanals.

Diese erste Schätzung ist jedoch noch sehr grob, so daß zumindest ein weiterer Iterationsschritt durchgeführt werden muß. Hierzu umfaßt die erfindungsgemäße Vorrichtung eine Einrichtung 20 zum Steuern der Iterationen. Insbesondere steuert die Einrichtung 20 die Erfassungseinrichtung und die Beaufschlagungseinrichtung, um einer erneuten Satz von beaufschlagten Datenkoeffizienten zu bilden. Wenn der weitere Satz von beauftragten Datenkoeffizienten an einem Ausgang 22 der Beaufschlagungseinrichtung 14 vorliegt, wird derselbe einem Addierer 24 zugeführt. Der Addierer 24 erhält ferner von dem Speicher 16 über einen Eingang 26 den bisherigen Speicherinhalt. Der Addierer 24 führt dann eine koeffizientenweise Addition durch, um einen Satz von aufaddierten Datenkoeffizienten zu erhalten, welche über einen Addiererausgang 28 wieder in den Speicher geschrieben werden. Vorzugsweise wird der alte Speicherinhalt mit den aufaddierten Datenkoeffizienten überschrieben. Aus dem Speicher 16 kann nun über den Ausgang 18 eine verbesserte Schätzung für die Systemautokorrelationsfunktion des Übertragungskanals ausgegeben werden.

Wird noch eine weitere Iteration gewünscht, so wird durch die Steuerungseinrichtung 20 eine entsprechende Steuerung der Erfassungseinrichtung, der Beaufschlagungseinrichtung, des Speichers und des Addierers vorgenommen, so daß ein weiterer Satz von aufaddierten Datenkoeffizienten gebildet wird, der eine noch bessere Schätzung für die Systemautokorrelationsfunktion des Übertragungskanals darstellt.

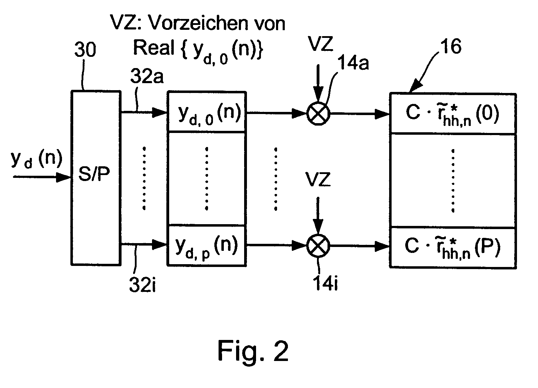

Fig. 2 zeigt eine schematische Realisierung eines Teils der erfindungsgemäßen Vorrichtung von Fig. 1. Die Erfassungseinrichtung 12 von Fig. 1 ist in Fig. 2 durch einen Seriell/Parallel-Wandler 30 schematisch dargestellt. In dem Seriell/Parallel-Wandler werden die seriell ankommenden Datenkoeffizienten $y_d(n)$, die am Ausgang des Übertragungskanals 10 von Fig. 1 ankommen, seriell/parallel-gewandelt. Die Breite des Seriell/Parallel-Wandlers legt hierbei die Anzahl der Datenkoeffizienten einer Folge von Datenkoeffizienten fest. Jeder Datenkoeffizient erhält einen eigenen Parallelverarbeitungszweig 32a bis 32i. Lediglich beispielhaft wird in Fig. 2 das Vorzeichen des Realteils des ersten Datenkoeffizienten der Folge ausgewählt. Dieses Vorzeichen wird dazu verwendet, um jeden Datenkoeffizienten $y_{d,i}$ damit zu beaufschlagen. Dies geschieht durch Multiplizierer 14a bis 14i. Die beaufschlagten Datenkoeffizienten werden schließlich in den Speicher 16 eingespeist. Jeder beaufschlagte Datenkoeffizient erhält eine eigene Speicherzelle, wie es in Fig. 2 dargestellt ist.

Aus den Gleichungen (19) und (20) ergibt sich, daß in der Speicherzelle nicht unmittelbar der entsprechende Koeffizient $r_{hh,n}$ steht, sondern der Wert multipliziert mit der Skalierungskonstante C, die unter Verwendung von Gleichung (16) berechnet werden kann. Aus Fig. 2 wird jedoch deutlich, daß sämtliche Koeffizienten der Systemautokorrelationsfunktion mit derselben Konstante C multipliziert sind, so daß sich bereits, ohne daß die Konstante C "herausskaliert" werden muß, der quantitative Verlauf der Systemautokorrelationsfunktion ergibt. Es sei darauf hingewiesen, daß in Fig. 2 der Addierer 24 nicht gezeigt ist. Selbstverständlich muß bei jeder Iteration der neue Satz von beaufschlagten Datenkoeffizienten zu dem bisher im Speicher vorhandenen Speicherinhalt koeffizientenweise aufaddiert werden, damit die in Gleichung (20) gegebene Iterationsvorschrift erfüllt wird.

Es sei ferner darauf hingewiesen, daß die Beaufschlagungseinrichtung in Fig. 2 als Gruppe von parallel angeordneten Multiplizierern gezeichnet ist. Hierbei handelt es sich jedoch nur um eine Vorzeichenumkehr oder um keine Vorzeichenumkehr der Datenkoeffizienten, so daß auch sämtliche anderen für solche Operationen bekannten Schaltungen eingesetzt werden können. Es sei darauf hingewiesen, daß das erfindungsgemäße Konzept zum Schätzen eines Übertragungskanals multiplikationsfrei ist, da keine Zahlen miteinander multipliziert werden müssen. Die Multiplizierer 14a bis 14i in Fig. 2 führen lediglich eine Multiplikation einer Zahl mit einem Vorzeichen durch und sind daher in ihrer Komplexität wesentlich einfacher als Vollmultiplizierer.

Bezüglich der Notation sei noch darauf hingewiesen, daß die Schlangen über den Koeffizienten der Systemautokorrelationsfunktion in Fig. 2 darauf hinweisen sollen, daß es sich hier nicht um exakte Werte handelt, sondern um Schätzwerte.

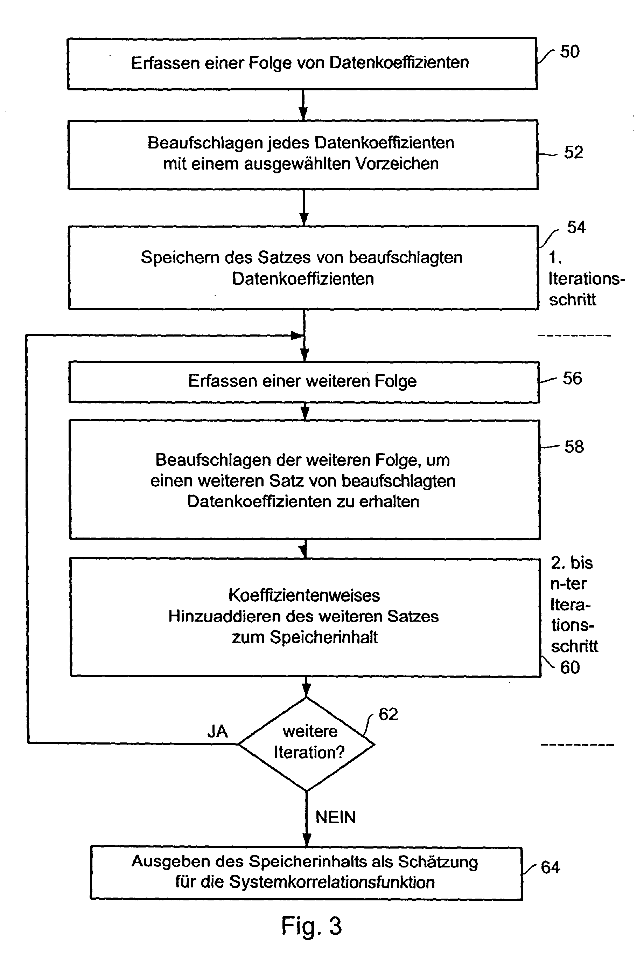

Im nachfolgenden wird anhand von Fig. 3 das erfindungsgemäße Verfahren in Flußdiagrammform dargestellt.

In einem ersten Schritt 50 wird eine Folge von Datenkoeffizienten erfaßt. Anschließend wird in einem zweiten Schritt 52 jeder Datenkoeffizient der Folge von Datenkoeffizienten mit einem ausgewählten Vorzeichen beaufschlagt, um einen Satz von beaufschlagten Datenkoeffizienten zu erhalten. Der Satz von beaufschlagten Datenkoeffizienten wird dann in einem Schritt 54 abgespeichert. Damit ist der erste Iterationsschritt beendet.

In einem zweiten Iterationsschritt wird eine weitere Folge von Datenkoeffizienten erfaßt, wie es durch einen Block 56 dargestellt wird. Die weitere Folge von Datenkoeffizienten wird dann wieder mit einem ausgewählten Vorzeichen beaufschlagt, um einen weiteren Satz von beaufschlagten Datenkoeffizienten zu erhalten, wie es durch einen Block 58 dargestellt ist. Anschließend wird, wie es durch einen Block 60 in Fig. 3 angedeutet ist, ein koeffizientenweises Hinzuaddieren des weiteren Satzes von Datenkoeffizienten zum bisherigen Speicherinhalt durchgeführt. In einem Schritt 62 wird dann festgestellt, ob noch weitere Iterationen gewünscht sind. Werden keine weiteren Iterationen erwünscht, so ist das Iterationsverfahren bereits nach dem zweiten Iterationsschritt abgeschlossen, um dann in einem Schritt 64 den Speicherinhalt als Schätzung für die Systemautokorrelationsfunktion des Übertragungskanals auszugeben. Dieser Schätzwert wird noch nicht die beste Qualität haben, hat jedoch bereits Ähnlichkeiten zu der tatsächlichen Systemautokorrelationsfunktion. Eine bessere Schätzung wird erhalten, wenn in dem Schritt 62 bestimmt wird, daß noch weitere Iterationen erwünscht sind. Sollte dies der Fall sein, so wird wieder zu dem Block 56 gesprungen, um eine weitere Folge zu erfassen, welche dann wieder mit einem ausgewählten Vorzeichen beaufschlagt wird, woraufhin wieder ein koeffizientenweises Hinzuaddieren stattfindet usw. Auf diese Art und Weise kann eine beliebige Anzahl von Iterationsschritten durchgeführt werden, um einen beliebig genauen Schätzwert für die Systemautokorrelationsfunktion des Übertragungskanals zu erhalten.

Es sei darauf hingewiesen, daß das erfindungsgemäße Verfahren besonders für eine dauernde Überwachung eines Übertragungskanals geeignet ist, da es Hardware-mäßig sehr einfach und damit schnell implementiert werden kann. Hierbei ist es dann nicht mehr erheblich, wieviel Iterationsschritte durchgeführt werden, da sich der Kanal ohnehin dynamisch ändert und somit nicht gesagt werden kann, welcher Iterationsschritt nach einer dynamischen Änderung des Kanals tatsächlich durchlaufen wird. Der Speicherinhalt wird immer nach einer gewissen Verzögerung die Systemautokorrelationsfunktion des Übertragungskanals mit guter Näherung liefern.

Wie es bereits ausgeführt worden ist, und wie es in Fig. 2 dargestellt worden ist, stehen nicht die tatsächlichen Koeffizienten der Systemautokorrelationsfunktion im Speicher, sondern dieselben multipliziert mit dem Faktor C. Um eine quantitative Schätzung für die Systemautokorrelationsfunktion zu erhalten, müssen die aufaddierten Koeffizienten durch den Skalierungsfaktor C geteilt werden und ferner durch die Anzahl der durchgeführten Iterationsschritte, um die tatsächlichen Koeffizienten des Systemautokorrelationsfunktion zu erhalten. Werden dieselben beispielsweise durch einen dem Speicher nachgeschalteten FFT-Prozessor in den Frequenzbereich transformiert, so ergibt sich unmittelbar die Leistungsübertragungsfunktion des Kanals, welche wiederum, nach einer Wurzelwertbildung, unmittelbar die Betragsübertragungsfunktion des Kanals wiedergibt, die insbesondere für eine adaptive Kanalentzerrung von großer Bedeutung ist. Es sei darauf hingewiesen, daß ein in dem Empfänger vorhandener adaptiver Entzerrer dauernd angesteuert werden kann, um ohne bekannte Eingangsfolgen verwenden zu müssen, während der Übertragung von Nutzdaten den Kanal adaptiv zu entzerren. Ändert sich der Kanal nicht allzu schnell, so wird damit eine optimale Kanalausnutzung mit geringer Bitfehlerrate erreicht.

In Fig. 4 ist ein Simulationsbeispiel. Der in Fig. 4 gezeigten Simulation liegt ein Mobilfunkkanal mit vier Koeffizienten (Ausbreitungspfade) zugrunde. Im Kanal wurde additives Gaußrauschen mit $Eb/N0 = 10$ dB und $Eb/N0 = 40$ dB angenommen. Die Länge der simulierten Folge betrug 100 Symbole. Es sei darauf hingewiesen, daß bei der in Fig. 4 gezeigten Darstellung nicht der Speicherinhalt des Speichers 16 unmittelbar genommen wurde, sondern daß die Skalierung herausgerechnet worden ist, und daß auch eine Division durch die Anzahl der Iterationsschritte durchgeführt worden ist.

Bei dem dargestellten Beispiel wurden 256 Iterationen durchgeführt. Hat der Kanal z. B. 4 Koeffizienten, so können mit einer empfangenen Anzahl von 260 Koeffizienten 256 Iterationen durchgeführt werden.

Bei dem in Fig. 4 gezeigten Simulationsbeispiel hatte die Systemautokorrelationsfunktion lediglich 7 von 0 verschiedene Werte, so daß der Grad des Kanals 4 beträgt. Es müssen jedoch nicht alle ausgewertet werden, da die Systemautokorrelationsfunktion symmetrisch ist. Daher genügt es, lediglich die Koeffizienten von $k = 0$ bis $k = 3$ zu berechnen und die Koeffizienten für $k = -1$, $-2$ und $-3$ einfach aufgrund der Symmetrieeigenschaften zu ermitteln.

Bei dem in Fig. 4 gezeigten Simulationsbeispiel wurde die Anzahl der Datenkoeffizienten in einer erfaßten Folge von Datenkoeffizienten, also die Anzahl der parallel verarbeiteten Zweige gleich 4 gewählt. Wenn jedoch der Grad des Kanals nicht von vornherein bekannt ist, so kann ein Probedurchlauf durchgeführt werden, welcher darin besteht, eine größere Anzahl von Datenkoeffizienten in einer Folge von Datenkoeffizienten zu erfassen, um dann nach einer gewissen Anzahl von Iterationsschritten festzustellen, ob in dem Speicher 16 aufaddierte Datenkoeffizienten vorhanden sind, die gleich 0 sind, bzw. die kleiner als ein bestimmter Schwellenwert sind. Wenn das in Fig. 4 gezeigte Simulationsbeispiel zunächst mit 20 Koeffizienten in einer Folge von Koeffizienten begonnen wird, so wird sich nach einer Anzahl von Iterationsschritten herausstellen, daß die ersten sieben Datenkoeffizienten entsprechende Werte haben, daß jedoch die letzten 13 Datenkoeffizienten gleich 0 bzw. im numerischen Rahmen gleich 0 sind. Nach diesem Vordurchlauf kann beispielsweise der Seriell/Parallel-Wandler von Fig. 2 eingestellt werden, um nur noch 4 Datenkoeffizienten in eine Folge von Datenkoeffizienten zu packen, derart, daß wieder eine Rechenzeitersparnis bzw. Leistungsersparnis erreicht wird, da nur noch 4 parallele Zweige statt anfänglich 20 parallelen Zweigen gerechnet werden müssen.

Der Gegenstand der vorliegenden Erfindung umfaßt somit ein Verfahren, mit dem eine rechenzeiteffiziente Schätzung des Systemautokorrelierten durchgeführt werden kann. Der wesentliche Vorteil des Verfahrens liegt im Verzicht auf Multiplikations- und Divisionsoperationen, was zu einer sehr effizienten Hardware-Implementierung führt.

**Patentansprüche**

1. Vorrichtung zum Schätzen einer Systemautokorrelationsfunktion eines Übertragungskanals (10), mit folgenden Merkmalen:

   einer Erfassungseinrichtung (12) zum Erfassen einer Folge von über den Übertragungskanal übertragenen Datenkoeffizienten am Ausgang des Übertragungskanals (10), wobei jeder Datenkoeffizient ein Vorzeichen hat;

   einer Beaufschlagungseinrichtung (14) zum Beaufschlagen jedes Datenkoeffizienten der Folge von Datenkoeffizienten mit einem Vorzeichen, das aus den Vorzeichen der Datenkoeffizienten ausgewählt ist, um einen Satz von beaufschlagten Datenkoeffizienten zu erhalten;

   einer Einrichtung (16) zum Speichern des Satzes von beaufschlagten Datenkoeffizienten;

   einer Einrichtung zum Erfassen und Verarbeiten einer weiteren Folge von Datenkoeffizienten durch Beaufschlagen jedes Datenkoeffizienten der weiteren Folge von Datenkoeffizienten mit einem Vorzeichen, das aus den Vorzeichen der Datenkoeffizienten der weiteren Folge von Datenkoeffizienten ausgewählt ist, um einen weiteren Satz von beaufschlagten Datenkoeffizienten zu erhalten; und

einer Additionseinrichtung (24) zum koeffizientenweisen Addieren des weiteren Satzes von beaufschlagten Datenkoeffizienten zu dem Satz von beaufschlagten Datenkoeffizienten, um einen Satz von aufaddierten Datenkoeffizienten zu erhalten, wobei der Satz von aufaddierten Datenkoeffizienten eine Schätzung für die Systemautokorrelationsfunktion des Übertragungskanals (10) darstellt.

2. Vorrichtung nach Anspruch 1, die ferner folgendes Merkmal aufweist:

eine Steuerungseinrichtung (20)

- zum Steuern der Speichereinrichtung (16), daß sie den Satz von aufaddierten Datenkoeffizienten speichert,

- zum Steuern der Einrichtung zum Erfassen und Verarbeiten, um aus noch einer weiteren Folge von Datenkoeffizienten einen noch weiteren Satz von beaufschlagten Datenkoeffizienten zu erhalten; und

- zum Steuern der Additionseinrichtung (24) zum Addieren des noch weiteren Satzes von beaufschlagten Datenkoeffizienten zu dem Satz von aufaddierten Datenkoeffizienten, um einen verbesserten Schätzwert für die Systemautokorrelationsfunktion des Übertragungskanals (10) zu erhalten.

3. Vorrichtung nach Anspruch 2,
bei der die Steuerungseinrichtung (20) angeordnet ist, um eine vorbestimmte Anzahl von Iterationen (N) unter Verwendung einer vorbestimmten Anzahl von Folgen von Datenkoeffizienten durchzuführen, um als Ergebnis der letzten Iteration einen weiter verbesserten Schätzwert nach einer N-ten Iteration zu erhalten.

4. Vorrichtung nach einem der vorhergehenden Ansprüche,
bei der die Beaufschlagungseinrichtung (14) ausgebildet ist, um beim Beaufschlagen der Datenkoeffizienten der Folge von Datenkoeffizienten und beim Beaufschlagen der Datenkoeffizienten der weiteren Folge von Datenkoeffizienten das Vorzeichen des gleichen Koeffizienten in der jeweiligen Folge von Datenkoeffizienten zu verwenden.

5. Vorrichtung nach einem der vorhergehenden Ansprüche,
bei der die Beaufschlagungseinrichtung (14) ausgebildet ist, um beim Beaufschlagen immer ein Vorzeichen des ersten Koeffizienten in der jeweiligen Folge zu verwenden.

6. Vorrichtung nach einem der vorhergehenden Ansprüche,
bei der die Datenkoeffizienten komplex sind und einen Realteil und einen Imaginärteil aufweisen, und bei dem die Beaufschlagungseinrichtung ausgebildet ist, um beim Beaufschlagen immer das Vorzeichen des Realteils eines Datenkoeffizienten zu verwenden.

7. Vorrichtung nach einem der vorhergehenden Ansprüche, die ferner folgendes Merkmal aufweist:

eine Rechnereinrichtung zum Teilen jedes aufaddierten Datenkoeffizienten durch eine Anzahl (N) der Iterationsschritte, um skalierte aufaddierte Datenkoeffizienten zu erhalten.

8. Vorrichtung nach einem der vorhergehenden Ansprüche, bei der die Einrichtung (20) zum Erfassen und Verarbeiten einer weiteren Folge von Datenkoeffizienten als Steuereinrichtung zum Steuern der Erfassungseinrichtung (12) und der Beaufschlagungseinrichtung (14) ausgeführt ist, um aus einer weiteren Folge von Datenkoeffizienten einen weiteren Satz von beaufschlagten Datenkoeffizienten zu erhalten.

9. Vorrichtung nach Anspruch 8,
bei der die Rechnereinrichtung ausgebildet ist, um die Systemautokorrelationsfunktion in den Frequenzbereich zu transformieren, um eine Schätzung für die spektrale Leistungsdichte des Übertragungskanals (10) zu erhalten.

10. Vorrichtung nach Anspruch 9,

bei der die Rechnereinrichtung ferner ausgebildet ist, um die Wurzel aus der Schätzung für die spektrale Leistungsdichte des Kanals zu berechnen, um eine Schätzung für den Betragsfrequenzgang des Kanals zu erhalten.

11. Vorrichtung nach einem der vorhergehenden Ansprüche, die ferner folgendes Merkmal aufweist:

eine Einrichtung zum Ermitteln des Grads des Übertragungskanals zum Untersuchen der Schätzung für die Systemautokorrelationsfunktion des Übertragungskanals, wobei der Grad des Übertragungskanals die Anzahl von Koeffizienten der Systemautokorrelationsfunktion entspricht, die größer als ein vorbestimmter Schwellenwert sind.

12. Vorrichtung nach Anspruch 11, bei der die Erfassungseinrichtung (12) ausgebildet ist, um nach einer Anzahl von Iterationen die Anzahl von Datenkoeffizienten in einer Folge von Datenkoeffizienten so zu wählen, daß die Anzahl gerade gleich dem Grad des Kanals ist.

13. Verfahren zum Schätzen einer Systemautokorrelationsfunktion eines Übertragungskanals, mit folgenden Schritten:

in einer ersten Iterationsstufe:

Erfassen (50) einer Folge von über den Übertragungskanal übertragenen Datenkoeffizienten an einem Ausgang des Übertragungskanals (10), wobei jeder Datenkoeffizient ein Vorzeichen hat;

Beaufschlagen (52) jedes Datenkoeffizienten der Folge von Datenkoeffizienten mit einem Vorzeichen, das aus den Vorzeichen der Datenkoeffizienten ausgewählt ist, um einen Satz von beaufschlagten Datenkoeffizienten zu erhalten; und

Speichern (54) des Satzes von beaufschlagten Datenkoeffizienten;

in einer zweiten Iterationsstufe:

Erfassen (56) einer weiteren Folge von Datenkoeffizienten am Ausgang des Übertragungskanals;

Beaufschlagen (58) jedes Datenkoeffizienten der weiteren Folge von Datenkoeffizienten mit einem Vorzeichen, das aus den Vorzeichen der Datenkoeffizienten ausgewählt ist, um einen weiteren Satz von beaufschlagten Datenkoeffizienten zu erhalten;

koeffizientenweises Addieren (60) des weiteren Satzes von beaufschlagten Datenkoeffizienten zu dem einen Satz von beaufschlagten Datenkoeffizienten, um einen Satz von aufaddierten Datenkoeffizienten zu erhalten, wobei der Satz von aufaddierten Datenkoeffizienten eine Schätzung für die Systemautokorrelationsfunktion des Übertragungskanals (10) darstellt.

14. Verfahren nach Anspruch 13, das folgende weitere Schritte aufweist:

in einer dritten Iterationsstufe:

Speichern des Satzes von aufaddierten Datenkoeffizienten;

Erzeugen noch einer weiteren Folge von beaufschlagten Datenkoeffizienten durch Wiederholen der Schritte des Erfassens und Beaufschlagens; und

koeffizientenweises Aufaddieren des erhaltenen Satzes von beaufschlagten Datenkoeffizienten zu dem gespeicherten Satz von aufaddierten Datenkoeffizienten, um einen weiteren Satz von aufaddierten Datenkoeffizienten zu erhalten, wobei der weitere Satz von aufaddierten Datenkoeffizienten eine verbesserte Schätzung für die Systemautokorrelationsfunktion des Übertragungskanals darstellt.

15. Empfänger mit folgenden Merkmalen:

einer Vorrichtung zum Schätzen einer Systemautokorrelationsfunktion eines Übertragungskanals nach einem der Ansprüche 1 bis 12, um eine Schätzung für die Systemautokorrelationsfunktion des Kanals zu liefern; und

einer Einrichtung zum Entzerren von Empfangssignalen unter Verwendung der Schätzung für die Systemautokorrelationsfunktion des Kanals.

Schätzung

18

Speicher  16

26

28

Addierer  24

Beauf-schlag.-einrichtung  14

22

Steuerung der Iterationen  20

Erfas-sungs-einrich-tung  12

Y

Übertragungs-kanal  10

X

Fig. 1

VZ: Vorzeichen von
Real $\{ y_{d,0}(n) \}$

Fig. 2

Erfassen einer Folge von Datenkoeffizienten — 50

↓

Beaufschlagen jedes Datenkoeffizienten
mit einem ausgewählten Vorzeichen — 52

↓

Speichern des Satzes von beaufschlagten
Datenkoeffizienten — 54

1.
Iterationsschritt

- - - - - - - -

↓

Erfassen einer weiteren Folge — 56

↓

Beaufschlagen der weiteren Folge, um
einen weiteren Satz von beaufschlagten
Datenkoeffizienten zu erhalten — 58

↓

Koeffizientenweises
Hinzuaddieren des weiteren Satzes
zum Speicherinhalt — 60

2. bis
n-ter
Iterationsschritt

↓

JA ◇ weitere
Iteration? — 62

- - - - - - - -

↓ NEIN

Ausgeben des Speicherinhalts als Schätzung
für die Systemkorrelationsfunktion — 64

Fig. 3

Fig. 4

$$h(t)= g(t)\otimes k(t)\otimes r(t)$$

$$y(t)= h(t)\otimes x(t)$$

Fig. 5